# EUROPEAN PATENT APPLICATION

(11) **EP 1 710 040 A2**
(43) Date of publication of application: **11.10.2006**
(21) Application number: 06007196.6
(22) Date of filing: 05.04.2006
(51) Int. Cl.: B23K 26/08

(54) **Laser welding method and laser welding robot**

(30) Priority: 06.04.2005 JP 2005110047
(71) Applicant: FANUC LTD, Minamitsuru-gun, Yamanashi 401-0597 (JP)
(72) Inventor: Otsuka, Kazuhisa Room 8-104, Minamitsuru-gun Yamanashi 401-0511 (JP); Furuya, Yoshitake Fanuc, Minamitsuru-gun Yamanashi 401-0511 (JP)
(74) Representative: Thum, Bernhard

(57) **Abstract**

A laser welding method using a laser welding robot irradiating a workpiece with a laser beam, the laser welding method has firing the laser beam at a time of not welding, making the laser beam move to the next weld location at a feed rate faster than the feed rate at a time of welding and not leaving a heat affected layer at the workpiece in a state while firing the laser beam, and successively welding a plurality of weld locations of the workpiece. It is possible to make the laser beam move at the time of not welding while defocused. Also, a laser welding robot irradiating a workpiece with a laser beam, provided with a laser output controller controlling the robot to fire a laser beam both at a time of welding and at a time of not welding and fast feed mechanisms for making the laser beam move by a feed rate faster than the feed rate at the time of welding and not leaving a heat affected layer at the workpiece. It is possible to make the fast feed mechanism move simultaneously with movement of the robot body.

## Description

### BACKGROUND OF THE INVENTION

### 1. Field of the Invention

The present invention relates to a laser welding method and laser welding robot to weld a plurality of locations of a workpiece while moving a laser beam.

### 2. Description of the Related Art

The laser welding method using a welding robot to move a laser head to weld a plurality of locations of a workpiece is being used as technology taking the place of resistance welding in production lines of automobiles etc. Resistance welding is welding sandwiching overlaid metal members by the front ends of electrodes, running a current while applying a pressing force to the weld location, and thereby partially bonding them. In resistance welding, when the workpiece includes a plurality of weld locations, the welding work is performed intermittently. For this reason, with this type of work, the wider the scope of the work, the larger the ratio of the non-working time in the cycle time of one step of work.

Even when using a welding robot for laser welding in place of resistance welding, when there are a plurality of weld locations, the welding work is performed intermittently. The work of firing a laser beam at a weld location, stopping the laser beam at a non-weld location, and moving the laser head to the next weld location is successively repeated. For this reason, in the same way as resistance welding, the work becomes poor in work efficiency.

In general, a welding robot performing laser welding is provided with a robot body as a manipulator having a plurality of control axes and a laser head attached to the robot body and firing a laser beam toward the workpiece. As an example of this type of welding robot, there is the one disclosed in Japanese Unexamined Patent Publication No. 2001-191191 (JP-A-2001-191191).

In this patent document, a multi-articulated welding robot is shown. The wrist of the robot has the laser head attached to it. The laser head is provided with a support plate having a pair of linear guides extending in the vertical direction. A moving body having a laser projector is guided by the linear guides to be able to move freely in the vertical direction.

In this conventional method, when using a welding robot for laser welding, stopping the firing of the laser beam at the non-weld locations requires the excitation source of the laser oscillator to be turned off and the shutter to be closed. Conversely, firing the laser beam at a weld location requires the excitation source to be turned on and the shutter to be opened. When there are a plurality of weld locations on a workpiece, the excitation source has to be repeatedly turned on/off and the shutter repeatedly opened/closed. For this reason, even if one opening/closing time of the shutter is short, if the shutter is repeatedly opened/closed, the cumulative opening/closing time becomes a length which can no longer be ignored and the ratio of the non-welding time in the work cycle time becomes larger.

Further, when turning the excitation source of the laser oscillator on, a predetermined startup time is required before the energy of the laser beam reaches its peak, so in actuality, a time considering the startup of the laser beam is included in the non-welding time, so the non-welding time becomes longer and the work cycle time is further prolonged.

### SUMMARY OF THE INVENTION

The object of the present invention is to provide a laser welding method and a laser welding robot which can shorten the cycle time of the welding process and improve the work efficiency.

To achieve the above object, the present invention provides a laser welding method using a laser welding robot irradiating a workpiece with a laser beam, comprising operating the laser welding robot so as to fire the laser beam at a time of not welding, operating the laser welding robot so as to make the laser beam move to the next weld location at a feed rate faster than the feed rate at a time of welding and not leaving a heat affected layer at the workpiece in a state while firing the laser beam, and successively welding a plurality of weld locations of the workpiece.

In this laser welding method, it is also possible to make the laser beam move at the time of not welding while defocused.

Further, the present invention provides a laser welding method using a laser welding robot irradiating a workpiece with a laser beam, comprising operating the laser welding robot to fire a laser beam at a time of not welding, operating the laser welding robot to make the laser beam move to the next weld location while defocused in the state while firing the laser beam, and successively welding a plurality of weld locations of the workpiece.

Further, the present invention provides a laser welding robot irradiating a workpiece with a laser beam, provided with a laser output controller controlling the robot to fire a laser beam both at a time of welding and at a time of not welding and a fast feed mechanism for making the laser beam move by a feed rate faster than the feed rate at the time of welding and not leaving a heat affected layer at the workpiece.

In the laser welding robot, the fast feed mechanism can be made to move simultaneously with movement of the robot body.

Further, the present invention provides a laser welding robot irradiating a workpiece with a laser beam, provided with a laser output controller for controlling the robot for firing a laser beam both at a time of welding and at a time of not welding and a defocusing mechanism for defocusing the laser beam at the workpiece.

### BRIEF DESCRIPTION OF THE DRAWINGS

These and other objects, features, and advantages of the present invention will become clearer from the following description of the preferred embodiments given in relation to the attached drawings, in which:
FIG. 1 is a view of the configuration of a first embodiment of a laser welding robot according to the present invention,
FIG. 2 is similarly a view explaining a laser welding robot,
FIG. 3 is a view explaining the state of firing a laser beam at a workpiece,
FIG. 4 is a flow chart for explaining a first embodiment of a laser welding method according to the present invention,
FIG. 5 is an explanatory view of a second embodiment of a laser welding robot according to the present invention,
FIG. 6A is a view of a focused state relating to a state of firing a laser beam at a workpiece,
FIG. 6B is similarly a view of a state defocused at the top in the state of firing a laser beam at a workpiece,
FIG. 6C is similarly a view of a state defocused at the bottom in the state of firing a laser beam at a workpiece, and
FIG. 7 is a flow chart for explaining a second embodiment of a laser welding method according to the present invention.

### DETAILED DESCRIPTION

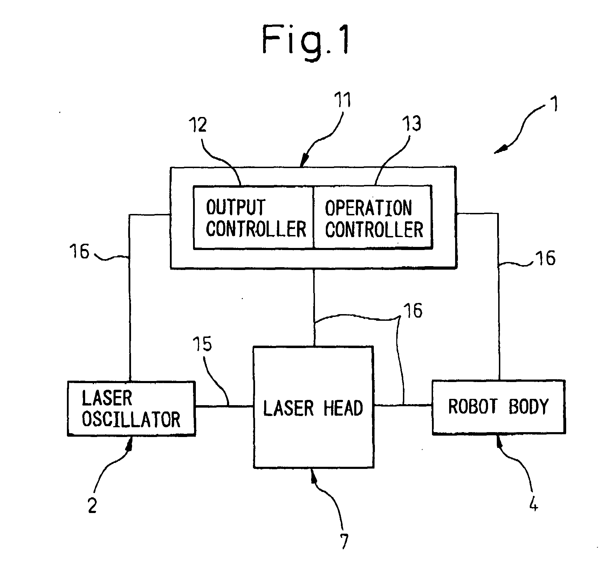

Below, preferred embodiments of the present invention will be explained in detail with reference to the drawings. FIG. 1-3 are views for explaining a laser welding method and laser welding robot according to a first embodiment of the present invention.

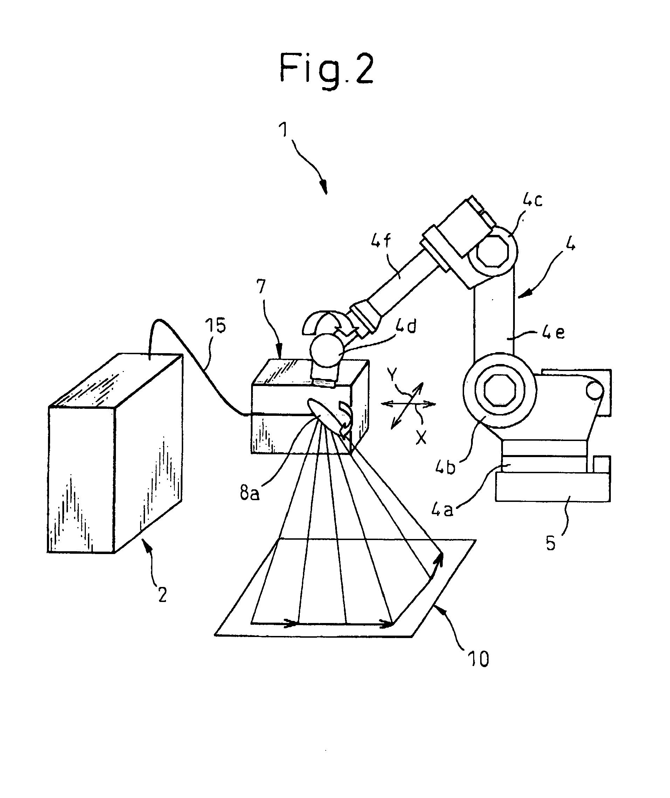

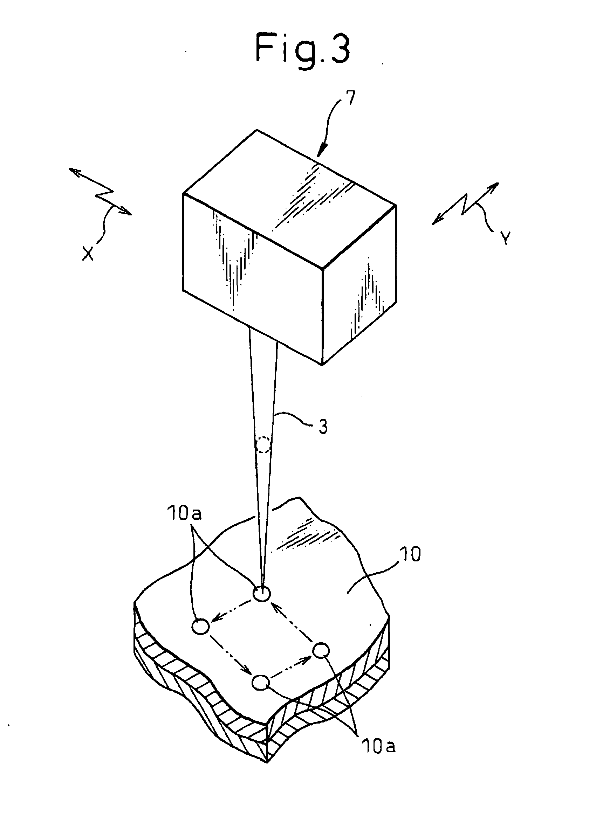

As shown in FIG. 1 and FIG. 2, a laser welding robot 1 of this embodiment is provided with a robot body 4 as a so-called multi-articulated manipulator having a plurality of controllable control axes, a laser oscillator 2 amplifying and discharging a laser beam 3 (see FIG. 3), a laser head 7 mounted at the front end of the robot body 4 and firing the laser beam 3 at the workpiece 10, and a control system 11 controlling the laser oscillator 2 etc. (not shown in FIG. 2).

The laser oscillator 2 is comprised of an excitation source (not shown) for supplying energy to the laser medium and a resonator (not shown) having laser medium and two mirrors of different light transmittances at the two sides of the laser medium. The laser oscillator 2 is controlled by the control system 11 and conveys the laser beam 3 through an optical fiber 15 to the laser head 7.

The control system 11 has a CPU (central processing unit). The CPU has a ROM (memory), a RAM (memory), a nonvolatile memory, an input/output device, and an input/output interface connected to it through a bus (semiconductor devices all not shown). The ROM stores a work program for controlling the laser oscillator 2, laser head 7, and robot body 4. The RAM stores temporary data for work. The nonvolatile memory stores various settings relating to operation of the different systems.

Further, the control system 11 is provided with a laser output controller 12 for on/off control of the laser oscillator 2 and for setting the firing conditions of the laser beam 3 and an operation controller 13 for controlling the operation of the robot body 4. The laser oscillator 2, laser head 7, and robot body 4 connected through signal lines 16 to the control system 11 are controlled based on input data or based on a work program.

The laser output controller 12 controls the robot to fire the laser beam 3 constantly until the welding process ends. Due to this, when intermittently welding a plurality of (a large number of) weld locations in a broad range, it is no longer necessary to operate a not shown shutter of the laser oscillator 2 or wait until the laser beam 3 reaches peak output and fast movement to the next weld locations 10a (FIG. 3) becomes possible. For this reason, the work cycle time in the welding process is shortened and the work efficiency is improved.

As shown in FIG. 2, the robot body 4 is mounted on a high rigidity foundation 5. It has, in order from the base 4a, first, second, and third joints 4b, 4c, and 4d. The base 4a and the joints 4b, 4c, and 4d are connected in a rotatable manner. The joints 4b, 4c, and 4d are connected by high rigidity members 4e and 4f. This robot body 4 is designed to be able to freely move along a plurality of rotational axes. Further, the robot body 4 and the laser head 7 are designed to be able to move synchronously or independently.

The robot body 4 is provided at its front end with an end effector constituted by the laser head 7. The laser head 7 is provided with a mirror for reflecting the laser beam 3 in a predetermined direction, a condensing lens((not shown) for condensing the laser beam 3 to improve the energy density, and a movable mirror (fast feed mechanism) 8a for making the laser beam 3 scan a narrow range. The movable mirror 8a is designed to move synchronously with the robot body 4 or independently from the robot body 4.

The laser head 7 is further provided with a servo motor (not shown) for controlling the angle of the movable mirror 8a. The movable mirror 8a rotates under the control of the control system 11 so as to rotate by a predetermined rotational angle by the servo motor. Due to this, the laser beam 3 reflected by the movable mirror 8a is designed to be able to move in the X-axial direction and Y-axial direction (FIG. 3). By making this laser beam 3 move fast, even while firing the laser beam 3 at the time of not welding, it is possible to prevent a heat affected layer from being left without causing the surface of the workpiece 10 to discolor or melt.

By making the movable mirror 8a rotate without relation with the movement of the large inertia robot body 4, when intermittently welding repeated a number of times, it is possible to successively move fast to the next weld locations. When making the movable mirror 8a rotate simultaneously with movement of the robot body 4, compared with the case of making the movable mirror 8a rotate independently, the scan range of the laser beam 3 becomes broader and a wider range area can be made the weld area.

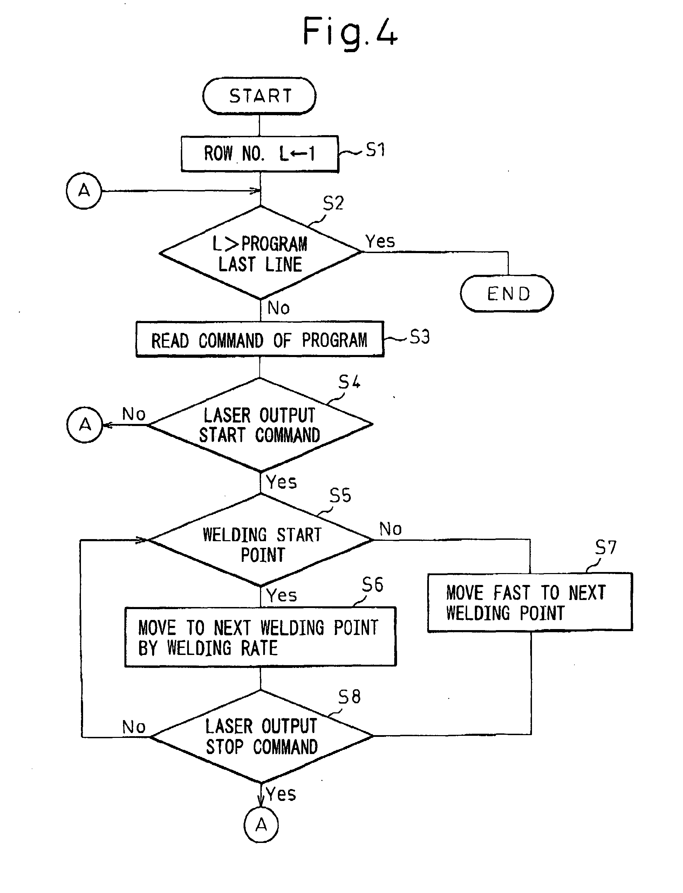

Next, the method of intermittently laser welding a plurality of weld locations of a workpiece 10 will be explained based on the flow chart of a work program of FIG. 4. At step S1, the work program is initialized. At step S2, it is judged if the line number is the final line. If the final line, the execution of the program is ended. If not, the routine proceeds to step S3.

At step S3, the instructions of the work program are read. At step S4, it is judged whether to fire the laser beam 3. If firing it, the routine proceeds to step S5, while if not, it returns to step S2. At step S5, it is judged if the location is a weld location 10a. If a weld location 10a, the laser beam 3 scans it for welding by a welding rate determined at step S6. If the location is not a weld location 10a, the routine proceeds to step S7 where the laser beam 3 is moved quickly to the next weld location 10a. When the workpiece 10 is large and the weld range exceeds the scan range of the laser beam 3, the robot body 4 is made to move relative to the workpiece 10.

At step S8, it is judged whether to stop the firing of the laser beam 3. If stopping it, the routine returns to step S2. If not stopping it, the routine returns to step S5 where the intermittent welding is repeated. After all weld locations have finished being welded, the laser beam 3 stops being fired and the program ends.

As explained above, according to the first embodiment, at the time of not welding as well, the laser beam 3 continues being fired, so there is no longer a need to repeatedly turn the excitation source on/off and repeatedly open/close the shutter of the laser oscillator 2, the cycle time of the welding process is shortened, and the work efficiency is improved. Further, by moving the laser beam 3 to the next weld location 10a at the time of not welding by a feed rate faster than the feed rate at the time of welding, even if continuing to fire the laser beam 3 at the time of not welding, it is possible to prevent a heat affected layer from being left without causing the surface of the workpiece 10 to discolor or melt.

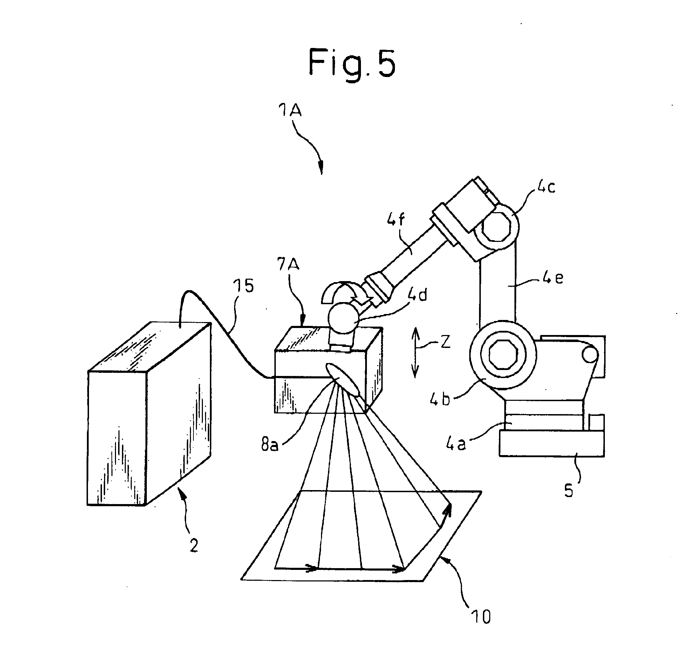

Next, a second embodiment of a laser welding method and laser welding robot according to the present invention will be explained based on FIG. 5 to FIG. 7. Note that parts of this embodiment common with the first embodiment are assigned the same reference numerals and explanations are omitted.

The laser welding robot 1A of the present embodiment differs from the laser welding robot 1 of the first embodiment on the point of being provided with a defocusing mechanism (not shown). The rest of the parts are the same as the first embodiment.

The defocusing mechanism is a slide mechanism making the laser head 8 move in the Z-axis direction (vertical direction). For example, a mechanism combining a servo motor and ball-screw mechanism can be employed. By making the laser head 8 move in the Z-axis direction in this way, it is possible to defocus the laser beam 3 from the workpiece 10.

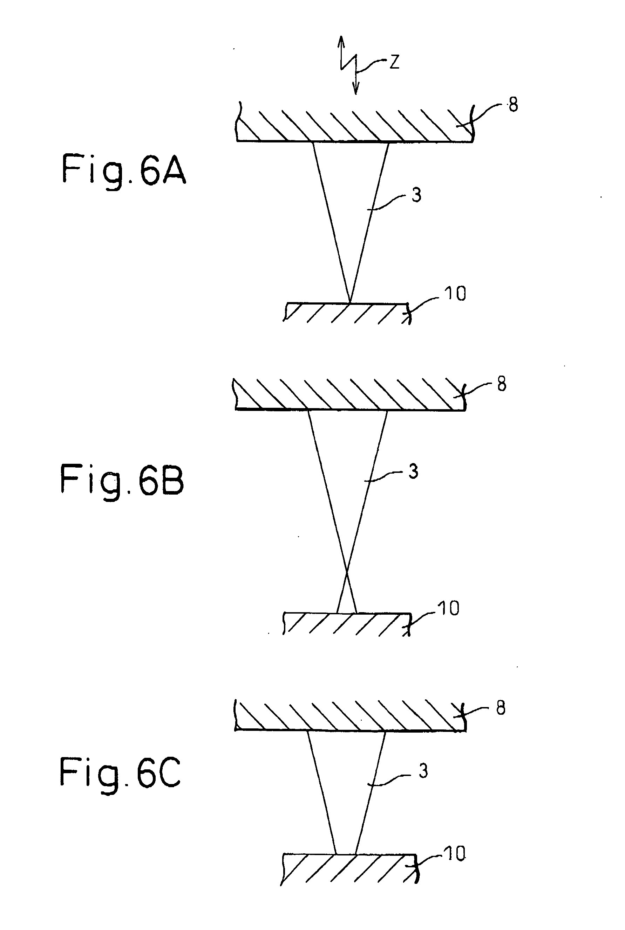

FIGS. 6A to 6C shows the focused state and defocused state of the laser beam 3. FIG. 6A shows the focused state where the spot is the smallest in diameter and the energy density is the largest. FIG. 6B shows the state where the focus is off to the top side. FIG. 6C shows the state where the focus is off to the bottom side. As shown in FIGS. 6B and 6C, when the focus is off, the result is a defocused state where the spot becomes larger in diameter and the energy density becomes smaller.

By defocusing the laser beam 3 in this way, even if continuing to fire the laser beam 3 when moving the laser beam 3 to the next weld location 10a, it is possible to prevent the surface of the workpiece 10 from being discolored or melting.

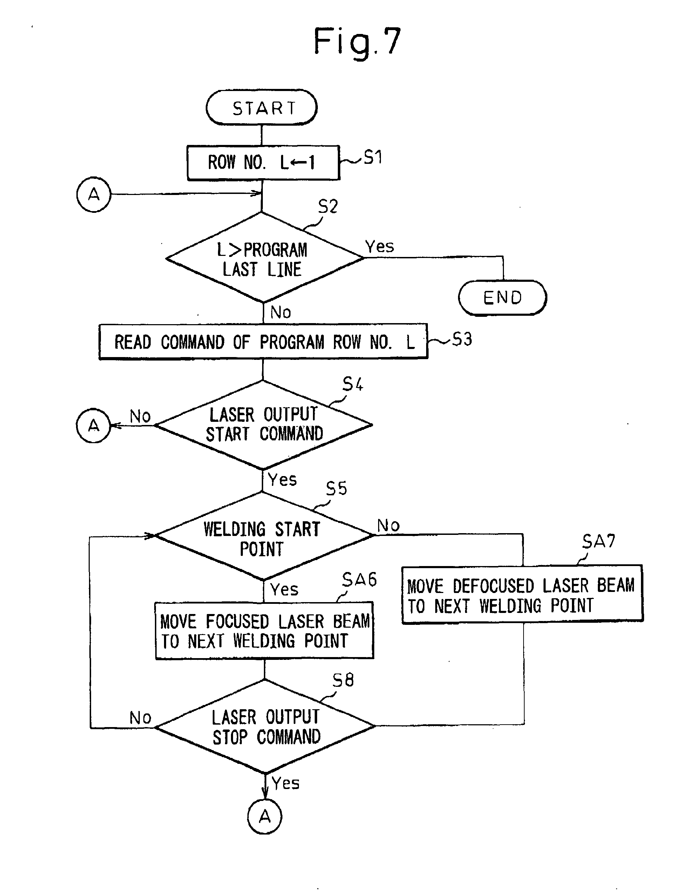

Next, the method of intermittently laser welding a plurality of weld locations 10a of a workpiece 10 will be explained based on the flow chart of a work program of FIG. 7. The laser welding method of the present embodiment differs from the laser welding method of the first embodiment in that steps S6 and S7 are replaced by steps SA6 and SA7. The rest of the points are the same.

Explaining the points of difference, at step S5, it is judged if the location is a weld location 10a. If a weld location 10a, the routine proceeds to step SA6 where the workpiece 10 is welded by focusing the laser beam 3, while when not, the routine proceeds to step SA7 where the laser beam 3 is moved to the next weld location while being defocused. The rest of the steps are common with those of the first embodiment, so explanations will be omitted here.

As explained above, according to the second embodiment, even if firing the laser beam 3 at the time of not welding, it is possible to defocus the laser beam 3 from the workpiece 10 so as to enlarge the diameter of the spot of the laser beam 3 and thereby reduce the energy density at the position where the laser beam 3 is fired and prevent surface degradation of the workpiece 10. Therefore, it is possible to shorten the work cycle time and improve the work efficiency without impairing the surface quality of the workpiece 10.

Note that the present invention is not limited to the above embodiments and can be modified in various ways within a scope not departing from the framework of the present invention. For example, the laser output control mechanism 12 is provided in the control system 11, but may also be provided in the laser oscillator 2.

Further, in the first embodiment, the laser beam 3 is moved at a fast speed by the movable mirror 8a of the laser head 7, but laser head 8 may also be moved by a slide mechanism in the two mutually perpendicular X- and Y-axes or further in the Z-axis for a total of three axes. In this case, as the slide mechanism, for example, a mechanism combining a servo motor and a ball-screw mechanism or a linear motor mechanism etc. may be used.

Further, the defocusing mechanism may also be made a means for moving the not shown condensing lens inside the laser head 8 in the Z-axis direction.

Above, the present invention was explained in relation to preferred embodiments, but a person skilled in the art will understand that it can be modified and changed in various ways without departing from the scope of the later explained claims.

## Claims

1. A laser welding method using a laser welding robot (1) irradiating a workpiece with a laser beam (3), comprising:
operating said laser welding robot (1) so as to fire the laser beam (3) at a time of not welding;
operating said laser welding robot (1) so as to make said laser beam (3) move to the next weld location at a feed rate faster than the feed rate at a time of welding and not leaving a heat affected layer at said workpiece in a state while firing said laser beam; and
successively welding a plurality of weld locations of said workpiece.

2. A laser welding method as set forth in claim 1, further comprising making said laser beam move at the time of not welding while defocused.

3. A laser welding method using a laser welding robot (1) irradiating a workpiece with a laser beam (3), comprising:
operating said laser welding robot (1) to fire a laser beam (3) at a time of not welding;
operating said laser welding robot (1) to make said laser beam (3) move to the next weld location while defocused in the state while firing said laser beam (3); and
successively welding a plurality of weld locations of said workpiece.

4. A laser welding robot (1) irradiating a workpiece with a laser beam (3), comprising:
a laser output controller (12) controlling a robot body to fire a laser beam (3) both at a time of welding and at a time of not welding; and
fast feed mechanism for making said laser beam (3) move by a feed rate faster than the feed rate at the time of welding and not leaving a heat affected layer at the workpiece.

5. A laser welding robot (1) as set forth in claim 4, wherein said fast feed mechanism can be made to move simultaneously with movement of said robot body (4).

6. A laser welding robot (1) irradiating a workpiece with a laser beam (3):
a laser output controller (12) for controlling the robot for firing a laser beam (3) both at a time of welding and at a time of not welding; and
a defocusing mechanism for defocusing said laser beam (3) at the workpiece.
